# EUROPÄISCHE PATENTSCHRIFT

(11) **EP 3 121 371 B1**
(45) Veröffentlichungstag und Bekanntmachung des Hinweises auf die Patenterteilung: **28.10.2020**
(21) Anmeldenummer: 16175769.5
(22) Anmeldetag: 22.06.2016
(51) Int. Cl.: F01D 5/08, F01D 5/18

(54) **TURBINE MIT GEKÜHLTEN TURBINENLEITSCHAUFELN**
TURBINE WITH COOLED TURBINE GUIDE VANES
TURBINE COMPRENANT DES AUBES DIRECTRICES REFROIDIES

(30) Priorität: 21.07.2015 DE 102015111843
(43) Veröffentlichungstag der Anmeldung: 25.01.2017
(73) Patentinhaber: Rolls-Royce Deutschland Ltd & Co KG, 15827 Blankenfelde-Mahlow (DE)
(72) Erfinder: Negulescu, Dimitrie, 15827 Blankenfelde-Mahlow (DE); Täge, Jens, 15827 Blankenfelde-Mahlow (DE); Negulescu, Joana, 15827 Blankenfelde-Mahlow (DE); Lehmann, Knut, 15827 Blankenfelde-Mahlow (DE)
(74) Vertreter: Kronthaler, Wolfgang N.K.

(56) Entgegenhaltungen:
- EP-A1- 1 245 804
- EP-A1- 2 725 191
- EP-A2- 1 004 748
- EP-A2- 1 013 882
- EP-A2- 1 921 270
- DE-A1- 2 065 334
- US-A- 3 791 758
- US-B1- 7 921 654

## Beschreibung

Die Erfindung betrifft eine Turbine, insbesondere eine Hochdruckturbine, für ein Flugtriebwerk, mit in einem Gehäuse angeordneten Turbinenleitschaufeln, gemäß der im Oberbegriff des Patentanspruches 1 näher definierten Art.

Aus der Praxis sind Hochdruckturbinen von Flugtriebwerken mit umfangsseitig in einem Turbinengehäuse angeordneten Turbinenleitschaufeln bekannt, bei denen die Turbinenleitschaufeln gekühlt werden. Die zusammen ein Turbinenleitrad (NGV) bildenden Turbinenleitschaufeln werden hierzu mit Kühlluft beispielsweise aus einer der letzten Stufen eines Hochdruckkompressors versorgt, wobei die Kühlluft von außen über Rohrleitungen zunächst einem dem Turbinenleitrad zugeordneten Ringraum am Turbinengehäuse zugeführt wird, der in radialer Richtung im Wesentlichen außerhalb der Turbinenleitschaufeln angeordnet ist. Dem Ringraum wird Kühlluft über vereinzelt über den Umfang verteilte Rohrleitungen zugeführt, wobei der Ringraum für jede Turbinenleitschaufel eine Öffnung aufweist, über die Kühlluft in einen Innenraum der Turbinenleitschaufel geleitet wird und über Auslassöffnungen im Bereich einer in axialer Richtung hinteren Kante der Turbinenleitschaufel aus der Turbinenleitschaufel strömt.

Im Bereich des Ringraums kann es im Betrieb derartiger Flugtriebwerke zu einer Querströmung von Kühlluft in Umfangsrichtung kommen, die nachteilhafterweise eine ungleichförmigen Kühlung der einzelnen Turbinenleitschaufeln zur Folge hat. Zudem wird für die Anordnung der Rohrleitungen zur Führung von Kühlluft von einem Kompressorgehäuse zu dem Turbinengehäuse viel Bauraum benötigt, und die bekannten Lösungen weisen nachteilhafterweise ein unerwünscht hohes Gewicht mit einem entsprechend großen spezifischen Brennstoffverbrauch auf, der wiederum zu einem unerwünscht großen Anteil an Stickoxiden im Abgasstrom führt.

Weiterhin ist es ein Problem bekannter Ausführungen, dass ein Spalt zwischen dem Turbinenleitrad und in axialer Richtung vor und hinter dem Turbinenleitrad angeordneten Rotorvorrichtungen, durch den zur Abdichtung sogenannte Sperrluft geführt wird, sich hinsichtlich Maß und Form durch die jeweiligen Temperaturausdehnungskoeffizienten in unerwünschter Weise verändert. Die Funktionalität eines Turbinenspaltkontrollsystems bezüglich axialer und radialer Spalte wird hiermit beeinträchtigt.

Aus der EP 1 921 270 A2 ist ein Gasturbinentriebwerk mit einer Turbine bekannt, wobei ein Innenraum von Statorschaufeln der Turbine über eine Kühlluftöffnung an deren radial innerer Wandung mit Kühlluft versorgt wird.

Die US 7,921,654 B1 offenbart eine Turbinenstatorschaufel, deren Innenraum gekühlt wird.

Aus der US 3,791,758 A ist ein Gasturbinentriebwerk bekannt, bei dem Kühlluft aus Düsen einer stationären Struktur in einen Ringraum geblasen wird, aus dem Kühlluft über seitliche Kühllufteinlassöffnungen in den Innenraum von Rotorschaufeln geführt wird.

Weiterhin beschreibt die EP 1 245 804 A1 eine Gasturbine mit einem Kühlsystem zur Luftkühlung mindestens einer Leitschaufel, wobei die Kühlluft eine stromauf der Leitschaufel angeordnete Laufschaufel durchströmt und am Ort ihres Austritts aus der Laufschaufel mittels eines Kanals der Leitschaufel zugeführt wird und durch diese hindurchtritt.

Der Erfindung liegt die Aufgabe zugrunde, eine Turbine für ein Flugtriebwerk der eingangs näher bezeichneten Art derart auszubilden, dass auf robuste, kostengünstige und gewichtsoptimierte Weise eine effiziente Kühlung der Turbinenleitschaufeln gewährleistet ist.

Erfindungsgemäß wird die Aufgabe mit einer gemäß den Merkmalen des Patentanspruchs 1 ausgebildeten Turbine gelöst.

Es ist mithin eine Turbine, insbesondere eine Hochdruckturbine, für ein Flugtriebwerk vorgesehen, mit einem Gehäuse, an dem umfangsseitig Turbinenleitschaufeln angeordnet sind, wobei die Turbinenleitschaufeln wenigstens einen im Betrieb der Turbine von Kühlluft durchströmten Innenraum aufweisen, und wobei wenigstens eine Turbinenleitschaufel im Bereich einer in radialer Richtung der Turbine inneren Wandung einen Kühlluftdurchlass aufweist, über den der Innenraum der Turbinenleitschaufel mit Kühlluft zur Kühlung der Turbinenleitschaufel im Betrieb der Turbine versorgbar ist.

Erfindungsgemäß wird vorgeschlagen, dass stromauf der Turbinenleitschaufeln eine Rotorvorrichtung mit Schaufelplattformen angeordnet ist, wobei Schaufelfüße von Laufschaufeln dieser Rotorvorrichtung einen Durchlass zur Führung eines Kühlluftstroms mit Drall in einen mit Drallströmung beaufschlagten Ringraum vor dem Kühlluftdurchlass aufweisen, wobei der Kühlluftstrom einem Sperrluftringraum zuführbar ist, der in radialer Richtung der Turbine unterhalb der inneren Wandung der wenigstens einen Turbinenleitschaufel angeordnet ist, und wobei der Drall des Kühlluftstroms derart einstellbar ist, dass neben der Kühlung der wenigstens einen Turbinenleitschaufel auch ein Spalt zwischen den Schaufelplattformen der Rotorvorrichtung und der inneren Wandung der Turbinenleitschaufeln abgedichtet wird.

Durch die erfindungsgemäße Ausführung der Turbine, bei der stromauf der Turbinenleitschaufeln eine Rotorvorrichtung wie z. B. ein Stufe-I-Rotor, angeordnet ist, wobei Schaufelfüße von Laufschaufeln dieser Rotorvorrichtung wenigstens einen Durchlass zur Führung eines Kühlluftstroms in einen Ringraum vor dem Kühlluftdurchlass aufweisen, ist auf einfache Weise ein zur Kühlung der Turbinenleitschaufeln ausreichender Druck, der sich aus einer statischen Komponente und einer dynamischen Drallkomponente zusammensetzt, zu erzielen. Die beispielsweise als Mikroturbinen ausgeführten Durchlässe können sich dabei im Wesentlichen in axialer Richtung der Turbine erstrecken.

Eine erfindungsgemäß ausgeführte Turbine hat den Vorteil, dass keine äußeren Rohrleitungen zur Versorgung der Turbinenleitschaufeln erforderlich sind, um die Turbinenleitschaufeln im Betrieb der Turbine in gewünschtem Umfang mit Kühlluft zu versorgen. Aus diesem Grund kann die vorgeschlagene Turbine gegenüber einer herkömmlich ausgeführten Turbine mit einer Kühlluftversorgung über äußere Rohrleitungen leichter ausgebildet werden. Zudem sind bei der erfindungsgemäßen Lösung Deckplatten, die bei herkömmlich ausgeführten Turbinen eingesetzt sind, nicht erforderlich.

Das reduzierte Gewicht führt dazu, dass ein mit der erfindungsgemäßen Turbine ausgeführtes Flugtriebwerk mit einem geringen spezifischen Brennstoffverbrauch betreibbar ist, wodurch ein Abgasstrom einen reduzierten Anteil an Stickoxiden aufweist. Die erfindungsgemäße Turbine ist zudem effizient über eine robuste, nicht störanfällige Gestaltung kühlbar, wodurch die Lebensdauer der Turbine gegenüber bekannten Turbinen erhöht ist.

Die grundsätzlich stufenunabhängig einsetzbaren Turbinenleitschaufeln der erfindungsgemäßen Turbine werden insbesondere über einen Kühlluftstrom eines sekundären Luftsystems gekühlt, der im Betrieb des Flugtriebwerks vorzugsweise im Bereich einer der letzten Stufen eines Hochdruckkompressors entnommen wird. Der Kühlluftstrom wird dabei insbesondere über einen Ringraum geführt, der unterhalb von Schaufelplattformen einer Rotorvorrichtung angeordnet ist, die in axialer Richtung der Turbine den ein Turbinenleitrad bildenden Turbinenleitschaufeln vorgeordnet sind. Der Ringraum ist in axialer Richtung der Turbine zumindest bereichsweise durch die Rotorvorrichtung und das Turbinenleitrad begrenzt. Von dem Ringraum wird der Kühlluftstrom einem sogenannten Sperrluftringraum zugeführt, der in radialer Richtung der Turbine unterhalb der inneren Wandung der Turbinenleitschaufeln angeordnet ist. Die Druckverhältnisse in dem Kühlluftstrom bzw. der Drall des Kühlluftstroms können dabei derart eingestellt werden, dass neben der Kühlung der Turbinenleitschaufeln auch der Spalt zwischen den Schaufelplattformen der Rotorvorrichtung und der inneren Wandung der Turbinenleitschaufeln abgedichtet wird.

Die erfindungsgemäße Turbine ist insbesondere bei einer Kühlung der Turbinenleitschaufeln über ein sekundäres Luftsystem geeignet, bei dem im Bereich einer durch einen Scheibenkranz gebildeten Umfangsfläche von Laufschaufeln der Rotorvorrichtung im Bereich von Kühlkanälen keine Abdichtplatten vorgesehen sind. Die zur Kühlung der Turbinenleitschaufeln erforderlichen Druckverhältnisse sind hierbei auf einfache Weise einstellbar.

Bei einer vorteilhaften Ausführung der erfindungsgemäßen Turbine ist es vorgesehen, dass der Kühlluftdurchlass eine einen Diffusorkanal bildende Geometrie aufweist. Das Vorsehen eines Diffusorkanals mit einer aus der Geometrie resultierenden Strömungsverzögerung bewirkt vorteilhafterweise eine effiziente Turbinenleitschaufelkühlung ohne unerwünscht große Druckverluste. Der durch die Verzögerung erzielbare Druckrückgewinn im Bereich des Kühlluftdurchlasses ermöglicht eine effiziente Innenkühlung der jeweiligen Turbinenleitschaufel, wobei auch in Bereichen mit großem Gegendruck Kühlluft sicher ausgeblasen werden kann. Die Lebensdauer der Turbine kann hierdurch vorteilhafterweise weiter erhöht werden.

Der einen Diffusorkanal bildende Kühlluftdurchlass weist vorzugsweise eine sich in Strömungsrichtung diffusorartig erweiternde Querschnittsfläche auf, wobei hierdurch auf konstruktiv einfache Weise ein Verzögerungskanal geschaffen ist.

Bei einer vorteilhaften Gestaltung des Kühlluftdurchlasses ist dessen Mittellinie ausgehend von einem Lufteinlass in Richtung eines Luftauslasses gekrümmt, wobei die Mittellinie im Bereich des Luftauslasses im Wesentlichen in radialer Richtung der Turbine verläuft. Hierdurch wird eine Strömungsgeschwindigkeit eines Kühlluftstroms im Bereich des Kühlluftdurchlasses verlangsamt und der statische Druck stetig erhöht, was letztlich zu einer verbesserten Kühlung der Turbinenleitschaufeln führt.

Die geometrische Gestaltung des Lufteinlasses erfolgt zweckmäßigerweise in einer Weise, dass die aerodynamische Eintrittsfläche im Auslegungspunkt auf die Absolutgeschwindigkeit der Anströmung optimiert ist, so dass eine weitestgehend verlustfreie Einströmung in den Kühlluftdurchlass erfolgen kann. Der Kühlluftdurchlass wird somit im Bereich des Lufteinlasses in gewünschtem Umfang zur im Betrieb der Turbine vorliegenden Drallströmung angestellt, so dass der Kühlluftstrom mit möglichst wenig Druckverlust in den Kühlluftdurchlass eintritt und eine größtmögliche Effizienz erzielt wird. Die Mittellinie des Kühlluftdurchlasses erstreckt sich hierfür im Bereich des Lufteinlasses in eine Richtung, die wenigstens annähernd gleichgerichtet zur Kühlluftanströmrichtung ist.

Bei einer vorteilhaften Ausführung der erfindungsgemäßen Turbine ist es vorgesehen, dass der Kühlluftdurchlass im Bereich des Lufteinlasses in Umfangsrichtung der Turbine von zwei Seitenfläche begrenzt ist, deren Abstand sich in Umfangsrichtung der Turbine ausgehend von dem Lufteinlass in Richtung eines Luftauslasses vergrößert. Hierbei wird eine dem Kühlluftdurchlass zugeführte Strömung vorteilhafterweise lediglich in geringem Umfang gestört. Zwischen den Seitenflächen kann der Lufteinlass dabei insbesondere von einem rampenförmig ausgeführten Bereich der inneren Wandung gebildet sein.

Der Kühllufteinlass ist vorzugsweise als sogenannter flacher NACA-Einlass ausgeführt. Alternativ oder zusätzlich hierzu kann der Kühlluftdurchlass im Bereich des Lufteinlasses eine Einlauflippe aufweisen, die insbesondere als bereichsweise Vorkragung in radialer und/oder axialer Richtung der Turbine über die innere Wandung der Turbinenleitschaufel hinausragt und somit im Betrieb der Turbine entgegen einer Strömung ragt.

Bei einer vorteilhaften Ausführung der Erfindung kann der Lufteinlass des Kühlluftdurchlasses auch einen Stirneinlauf bilden, wobei der Lufteinlass vorzugsweise Pitot-artig ausgeführt ist.

Der Kühlluftdurchlass ist vorzugsweise in der Art eines sogenannten Scoop ausgeführt, jedoch kann der Fachmann je nach Anwendungsfall auch kürzere Formen, z. B. in der Art eines Semi-Scoop, wählen.

Die Kühlluftführung im Innenraum der Turbinenleitschaufel kann prinzipiell beliebig ausgeführt sein, wobei in einer vorteilhaften Ausführung ein Einsatz zur Prallkühlung im Innenraum der Turbinenleitschaufel angeordnet sein kann, dem im Betrieb der Turbine ein Kühlluftstrom durch den Kühlluftdurchlass zuführbar ist. Der Einsatz kann hierbei mehrere Kühlauslässe aufweisen, über die der Kühlluftstrom im Bereich einer Hinterkante der Turbinenleitschaufel aus der Turbinenleitschaufel ableitbar ist.

Die Schaufelfüße der Laufschaufeln können neben wenigstens einem solchen Durchlass weiterhin wenigstens einen zusätzlichen Kanal zur Führung eines Kühlluftstroms in axialer Richtung der Turbine durch die Schaufelfüße aufweisen, wobei ein solcher Kanal wiederum eine Mikroturbine darstellen kann und vorzugsweise einen sogenannten Drallreduzierkanal bildet, mittels dem im Betrieb des Flugtriebwerks gewünschte Druckverhältnisse im Ringraum bzw. im Sperrluftringraum auf einfache Weise erzielbar sind.

Neben den genannten Merkmalskombinationen sind sowohl die in den Patentansprüchen angegebenen Merkmale als auch die in dem nachfolgenden Ausführungsbeispiel angegebenen Merkmale jeweils für sich alleine oder in beliebiger Kombination miteinander geeignet, den erfindungsgemäßen Gegenstand auszubilden.

Weitere Vorteile und Ausführungsmöglichkeiten der erfindungsgemäßen Turbine ergeben sich ebenfalls aus den Patentansprüchen und dem nachfolgenden unter Bezugnahme auf die Zeichnung prinzipmäßig beschriebenen Ausführungsbeispiel.

Es zeigt:
- Fig. 1: einen Teil-Längsschnitt durch eine zweistufige Hochdruck-Turbine, wobei an einem Turbinengehäuse angeordnete Turbinenleitschaufeln ersichtlich sind,
- Fig. 2: eine vereinfachte Ansicht eines Ausschnitts der Fig. 1, wobei ein Kühlluftdurchlass näher ersichtlich ist, über den einem Innenraum einer Turbinenleitschaufel Kühlluft zuführbar ist;
- Fig. 3: eine Schnittansicht gemäß der Linie A-A in Fig. 2;
- Fig. 4A: eine prinzipmäßige Darstellung einer ersten geometrischen Ausführungsvariante des Kühlluftdurchlasses der Fig. 1 bis Fig. 3 als so genannter NACA-Einlass;
- Fig. 4B: eine prinzipmäßige Darstellung einer zweiten geometrischen Ausführungsvariante des Kühlluftdurchlasses der Fig. 1 bis Fig. 3 als NACA-Einlass mit in die Strömung ausragender Einlauflippe; und
- Fig. 4C: eine prinzipmäßige Darstellung einer dritten geometrischen Ausführungsvariante des Kühlluftdurchlasses der Fig. 1 bis Fig. 3 als Pitot-artiger Stirneinlauf.

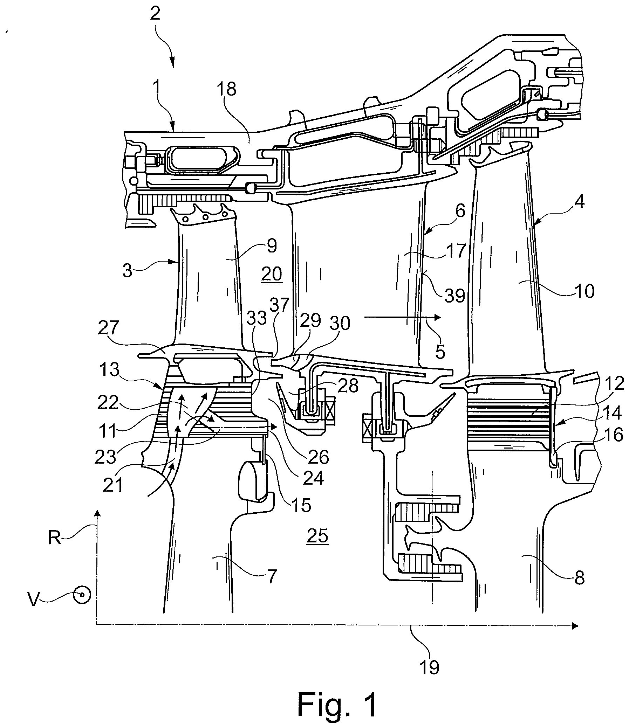

Bezug nehmend auf Fig. 1 bis Fig. 3 sind jeweils unterschiedliche Ausschnitte einer Hochdruck-Turbine 1 für ein Flugtriebwerk 2 bzw. Strahltriebwerk ersichtlich, welches eine Stufe-I-Rotorvorrichtung 3 und eine in Strömungsrichtung 5 eines Arbeitsgases nachgelagerte Stufe-II-Rotorvorrichtung 4 aufweist. In axialer Richtung A der Turbine 1 ist zwischen den Rotorvorrichtungen 3 und 4 ein Turbinenleitrad 6 angeordnet.

Die Rotorvorrichtungen 3, 4 weisen jeweils ein Scheibenrad 7 bzw. 8 und eine Vielzahl von umfangsseitig mit dem Scheibenrad 7 bzw. 8 wirkverbundenen Turbinen-Laufschaufeln 9 bzw. 10 auf, wobei die Laufschaufeln 9 bzw. 10 jeweils mit einem mit einem tannenbaumförmigen Profil 11 bzw. 12 ausgeführten Schaufelfuß 13 bzw. 14 in entsprechend profilierte Scheibenfinger des Scheibenrads 7 bzw. 8 eingreifen. Gegen eine axiale Verschiebung sind die Laufschaufeln 9 bzw. 10 durch einen geeignet gestalteten und an der Rotorscheibe bzw. dem Scheibenrad 7 bzw. 8 befestigten Schließring 15 bzw. eine Schließplatte 16 gesichert.

Das Turbinenleitrad 5 weist eine Vielzahl von Turbinenleitschaufeln 17 auf, die jeweils in Umfangsrichtung U der Turbine 1 verteilt an einem Turbinengehäuse 18 der Axial-Turbine 1 angeordnet sind. Ferner ist mit der Bezugsziffer 19 die Rotationsachse der Turbine 1 bezeichnet, um welche die miteinander auf hier nicht dargestellte Weise verbundenen Rotorvorrichtungen 3, 4 rotieren.

Im Bereich eines Ringkanals 20, in den sowohl die Laufschaufeln 9, 10 der Rotorvorrichtungen 3, 4 als auch die Turbinenleitschaufeln 17 des Turbinenleitrades 6 hineinragen, strömt im Betrieb des Flugtriebwerks in Strömungsrichtung 5 das Arbeitsgas. Aufgrund der hohen Temperaturen des Arbeitsgases werden vorliegend sowohl die Laufschaufeln 9, 10 als auch die Turbinenleitschaufeln 17 luftgekühlt.

Zur Kühlung wird insbesondere Kühlluftstrom eines sekundären Luftsystems, ein sogenannter interner Kühlluftstrom, von einem der Turbine 1 vorgeschalteten Verdichter bzw. Kompressor zugeführt. Dabei wird der Kühlluftstrom über einen in dem Scheibenrad 7 verlaufenden Versorgungskanal 21, der bezogen auf die Strömungsrichtung 5 im Bereich einer vorderen Stirnseite des Scheibenrads 8 mündet, einer Kühlluftkammer 22 zugeführt, die in Wirkverbindung mit nicht näher ersichtliche Kühlkanäle im Inneren der Laufschaufeln 9, 10 steht.

Von der Kühlluftkammer 22 zweigt zusätzlich ein weiterer Kühlluftkanal bzw. Durchlass 23 ab, der vollständig im Schaufelfuß 13 verläuft und in Strömungsrichtung 5 betrachtet auf einer Rückseite 33 des Schaufelfußes 13 mündet. Der Kühlluftkanal 23 ist über eine Düsenaustrittsöffnung 24 mit dem Zwischenstufenraum 25 zwischen den beiden Rotorvorrichtungen 3, 4, welcher meist als Inter Stage Cavity bezeichnet wird, verbunden, so dass durch den Kühlluftkanal 23 ein Teil des Kühlluftstromes, der der Rotorvorrichtung 3 zugeführt wird, in den Zwischenstufenraum 25 gelangt. Von hier wird er unter anderem an die Laufschaufeln 10 der Stufe-II-Rotorvorrichtung 4 geführt.

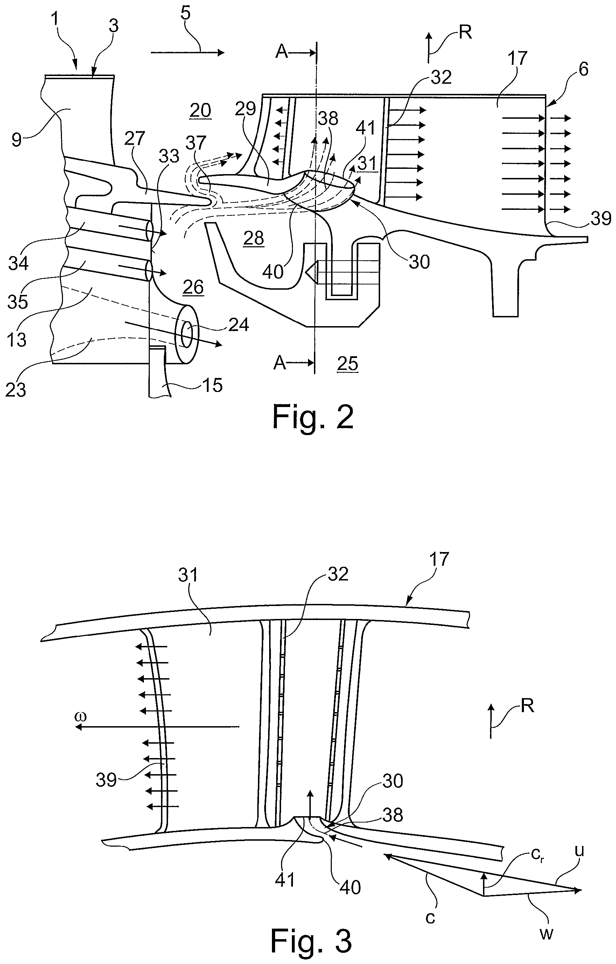

Ein Teil des dem Zwischenstufenraum 25 zugeführten Kühlluftstroms wird - wie in Fig. 2 näher ersichtlich ist - einem Ringraum 26 zugeführt, der unterhalb von Schaufelplattformen der Laufschaufeln 9 angeordnet ist. Der Ringraum 26 ist in Strömungsrichtung 5 einerseits durch die Rotorvorrichtung 3 und andererseits durch das Turbinenleitrad 6 begrenzt.

Daneben können optional zwei in den Schaufelfuß 13 integrierte Zuführkanäle 34, 35 vorgesehen sein, über die dem Ringraum 26 Kühlluft zur Drallreduzierung zuführbar ist.

Im Bereich des Ringraums 26 ist im Betrieb des Flugtriebwerks 2 ein Druck gegenüber herkömmlichen Ausführungen um insbesondere mehr als 10 %, vorliegend von etwa 16 bar auf 18 bar erhöht. Der Ringraum 26 steht wiederum in Wirkverbindung mit einem sogenannten Sperrluftringraum 28, der in radialer Richtung R der Turbine 1 unterhalb einer inneren Wandung 29 der Turbinenleitschaufeln 17 angeordnet ist.

Neben der Kühlung der Turbinenleitschaufeln 17 wird ein Teil des Kühlluftstroms als sogenannte Sperrluft im Bereich des Sperrluftringraum 28 zur Abdichtung eines Spalts 37 zwischen den Schaufelplattformen 27 der Rotorvorrichtung 3 und der inneren Wandung 29 der Turbinenleitschaufeln 17 verwendet, um zu verhindern, dass heißes Arbeitsgas von dem Ringkanal 20 in den Sperrluftringraum 28 eintritt.

Zur Kühlung der Turbinenleitschaufeln 17 wird der Kühlluftstrom aus dem Sperrluftringraum 28 jeweils über einen im Bereich der inneren Wandung 29 des Turbinenleitrades 17 vorgesehenen Kühlluftdurchlass 30 in einen Innenraum 31 der Turbinenleitschaufeln 17 geleitet und vorliegend durch einen Einsatz 32 zur Prallkühlung in Richtung einer bezüglich der Strömungsrichtung 5 hinteren Kante 39 der Turbinenleitschaufeln 17 geleitet, in deren Bereich der Kühlluftstrom durch sogenannte Effusionslöchern bzw. Austrittsöffnungen aus der Turbinenleitschaufel 17 austritt.

Wie in der Darstellung gemäß Fig. 3 näher ersichtlich ist, weist der dem Kühlluftdurchlass 30 zugeführte Kühlluftstrom bezogen auf die mit Pfeil ω gezeigte Drehrichtung der Rotorvorrichtungen 3, 4 einen positiven Drall auf. Die positive Drallströmung hat im Bereich des Ringraums 26 eine Drallzahl von größer 0,7 im Absolutsystem und im Bereich des Sperrluftringraums 28 eine Drallzahl von größer 0,5 im Absolutsystem, so dass die Drallzahl größer ist als im Bereich eines radial außerhalb der Turbinenleitschaufeln angeordneten Bereiches, über den die Turbinenleitschaufeln bei herkömmlichen Ausführungen gekühlt werden.

Aufgrund der mit der beschriebenen Konstruktion erzielbaren Drallzahlen tritt der Kühlluftstrom auf sichere Weise aus dem Sperrluftringraum 28 durch den Kühlluftdurchlass 30 in den Innenraum 31 der Turbinenleitschaufel 17 ein, wobei neben der gewünschten Kühlluftströmung auch eine Sperrluftströmung durch den Spalt 37 für sämtliche Störszenarien sichergestellt ist.

Zur Bildung eines Diffusorkanals weist der Kühlluftdurchlass 30 eine sich in Strömungsrichtung wie ein Diffusor erweiternde Kanalgeometrie auf, so dass sich eine Querschnittsfläche des Kühlluftdurchlasses 30 ausgehend von einem Lufteinlass 40 bis zu einem Luftauslass 41 insbesondere kontinuierlich erweitert. Die Kanalgeometrie weist dabei eine Krümmung auf, so dass ein dem Kühlluftdurchlass 30 zugeführter Kühlluftstrom im Wesentlichen in radialer Richtung R der Turbine 1 umgelenkt wird. Wie insbesondere in den Fig. 2 und Fig. 3 ersichtlich, ist der Kühlluftdurchlass 30 den darin geführten Kühlluftstrom umlenkend sowie verlangsamend und damit druckerhöhend ausgebildet.

Im Bereich des Lufteinlasses 40 ist eine Mittellinie 38 des Kühlluftdurchlasses 30 im Wesentlichen gleichgerichtet zu einer Strömungsrichtung des zugeführten Kühlluftstroms, wobei sich die Mittellinie 38 im Bereich des Luftauslasses 41 wenigstens annähernd in radialer Richtung R der Turbine 1 erstreckt, so dass der Kühlluftstrom im Bereich des Kühlluftdurchlasses 30 umgelenkt wird.

Der Kühlluftstrom, welcher im Bereich des Sperrluftringraums 28 eine Absolutgeschwindigkeit c aufweist, erfährt in dem entsprechend aerodynamisch ausgelegten Kühlluftdurchlass 30 eine Druckerhöhung, was in einem signifikanten Druckgewinn bei Austritt aus dem Kühlluftdurchlass resultiert. Diese Druckerhöhung bewirkt wiederum eine effiziente Kühlung der Turbinenleitschaufel 17.

In der Schnittansicht gemäß Fig. 3 ist der Kühlluftstrom im Bereich des Sperrluftringraums 28 vektoriell mit einem Geschwindigkeitsdreieck veranschaulicht. Darin ist mit w die Relativgeschwindigkeit der Strömung, mit c eine Absolutgeschwindigkeit der Strömung und mit cᵣ deren Radialkomponente und u eine Umfangsgeschwindigkeit dargestellt. Die Umfangsgeschwindigkeit u jeden Punktes der Rotorvorrichtungen 3 bzw. 4 kann beispielsweise 433 m/s betragen und die Kühlluftströmung mit einer Absolutgeschwindigkeit von 250 m/s in den Kühllufteinlass 30 eintreten, worin die Kühlluftgeschwindigkeit unter Erhöhung des Staudrucks auf z. B. auf 80 m/s reduziert wird.

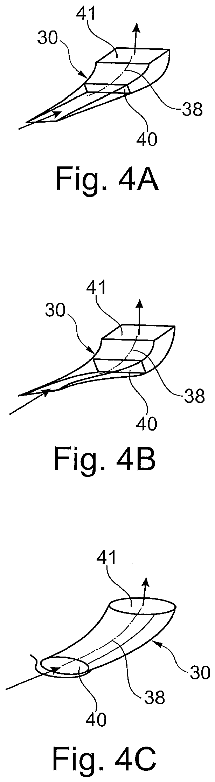

Die Fig. 4A bis Fig. 4C zeigen verschiedene mögliche Geometrien des Kühlluftdurchlasses 30, wobei ein in Fig. 4A prinzipmäßig dargestellter flacher NACA-Einlass, auch als Absenkeinlass oder "submerged inlet" bezeichnet, am günstigsten ist. Dabei ist der Kühllufteintritt in den Kühlluftdurchlass 30 als eine flache in die Oberfläche eingebrachte Rampe ausgebildet.

Je nach Eigenart der Konstruktion des Turbinenleitrads 6 und der Bestandteile des Ringraumes 26 sowie des Sperrluftringraumes 28 können auch andere Einlaufgeometrien von Vorteil sein, wie ein in Fig. 4B dargestellter NACA-Einlass mit in die Strömung ausragender Einlauflippe und größerem Lufteinlass 40 als bei der konventionellen NACA-Ausführung gemäß Fig. 4A oder ein in Fig. 4C dargestellter Pitot-artiger Stirneinlauf mit rundem Querschnitt, welcher auch als Scoop-Einlass bezeichnet wird.

### Bezuqszeichenliste

- 1: Turbine
- 2: Flugtriebwerk
- 3: Stufe-I-Rotorvorrichtung
- 4: Stufe-II-Rotorvorrichtung
- 5: Strömungsrichtung
- 6: Turbinenleitrad
- 7: Scheibenrad
- 8: Scheibenrad
- 9: Laufschaufel
- 10: Laufschaufel
- 11: tannenbaumförmiges Profil
- 12: tannenbaumförmiges Profil
- 13: Schaufelfuß
- 14: Schaufelfuß
- 15: Schließring
- 16: Schließplatte
- 17: Turbinenleitschaufel
- 18: Turbinengehäuse
- 19: Rotationsachse
- 20: Ringkanal
- 21: Versorgungskanal
- 22: Kühlluftkammer
- 23: Kühlluftkanal
- 24: Düsenaustrittsöffnung
- 25: Zwischenstufenraum
- 26: Ringraum
- 27: Schaufelplattform
- 28: Sperrluftringraum
- 29: innere Wandung der Turbinenleitschaufel
- 30: Kühlluftdurchlass, Diffusorkanal
- 31: Innenraum der Turbinenleitschaufel
- 32: Einsatz zur Prallkühlung
- 33: Rückseite des Schaufelfußes
- 34: Zuführkanal
- 35: Zuführkanal
- 37: Spalt
- 38: Mittellinie des Kühlluftdurchlasses
- 39: hintere Kante der Turbinenleitschaufel
- 40: Lufteinlass des Kühlluftdurchlasses
- 41: Luftauslass des Kühlluftdurchlasses
- R: radiale Richtung
- U: Umfangsrichtung
- c: Absolutgeschwindigkeit
- cᵣ: Radialkomponente
- u: Umfangsgeschwindigkeit
- w: Relativgeschwindigkeit
- ω: Rotationsgeschwindigkeit

## Patentansprüche

1. Turbine (1), insbesondere Hochdruckturbine, für ein Flugtriebwerk (2) mit einem Gehäuse (18) an dem umfangsseitig Turbinenleitschaufeln (17) angeordnet sind, wobei die Turbinenleitschaufeln (17) wenigstens einen im Betrieb der Turbine (1) von Kühlluft durchströmten Innenraum (31) aufweisen, und wobei wenigstens eine Turbinenleitschaufel (17) im Bereich einer in radialer Richtung (R) der Turbine (1) inneren Wandung (29) einen Kühlluftdurchlass (30) aufweist, über den der Innenraum (31) der Turbinenleitschaufel (17) mit Kühlluft versorgbar ist, **dadurch gekennzeichnet, dass** stromauf der Turbinenleitschaufeln (17) eine Rotorvorrichtung (3) mit Schaufelplattformen (27) angeordnet ist, wobei Schaufelfüße (13) von Laufschaufeln (9) dieser Rotorvorrichtung (3) einen Durchlass (23) zur Führung eines Kühlluftstroms mit Drall in einen mit Drallströmung beaufschlagten Ringraum (26) vor dem Kühlluftdurchlass (30) aufweisen, wobei der Kühlluftstrom von dem Ringraum (26) einem Sperrluftringraum (28) zuführbar ist, der in radialer Richtung der Turbine (1) unterhalb der inneren Wandung (29) der wenigstens einen Turbinenleitschaufel (17) angeordnet ist, und wobei der Drall des Kühlluftstroms derart einstellbar ist, dass neben der Kühlung der wenigstens einen Turbinenleitschaufel (17) auch ein Spalt (37) zwischen den Schaufelplattformen (27) der Rotorvorrichtung (3) und der inneren Wandung (29) der Turbinenleitschaufeln (17) abgedichtet wird.

2. Turbine nach Anspruch 1, **dadurch gekennzeichnet, dass** der Kühlluftdurchlass (30) eine einen Diffusorkanal bildende Geometrie aufweist.

3. Turbine nach einem der Ansprüche 1 oder 2, **dadurch gekennzeichnet, dass** der Kühlluftdurchlass (30) eine sich in Strömungsrichtung (5) diffusorartig erweiternde Querschnittsfläche aufweist.

4. Turbine nach einem der Ansprüche 1 bis 3, **dadurch gekennzeichnet, dass** eine Mittellinie (38) des Kühlluftdurchlasses (30) ausgehend von einem Lufteinlass (40) in Richtung eines Luftauslasses (41) gekrümmt ist, wobei die Mittellinie (38) im Bereich des Luftauslasses (41) im Wesentlichen in radialer Richtung (R) der Turbine (1) verläuft.

5. Turbine nach einem der Ansprüche 1 bis 4, **dadurch gekennzeichnet, dass** der Kühlluftdurchlass (30) im Bereich eines Lufteinlasses (40) in Umfangsrichtung (U) der Turbine (1) von zwei Seitenfläche begrenzt ist, deren Abstand sich in Umfangsrichtung (U) der Turbine (1) ausgehend von dem Lufteinlass (40) in Richtung eines Luftauslasses (41) vergrößert.

6. Turbine nach einem der Ansprüche 1 bis 5, **dadurch gekennzeichnet, dass** ein Lufteinlass (40) des Kühlluftdurchlasses (30) als NACA-förmiger Einlass ausgebildet ist.

7. Turbine nach einem der Ansprüche 1 bis 6, **dadurch gekennzeichnet, dass** ein Lufteinlass (40) des Kühlluftdurchlasses (30) mit einer Einlauflippe ausgebildet ist.

8. Turbine nach einem der Ansprüche 1 bis 7, **dadurch gekennzeichnet, dass** ein Lufteinlass (40) des Kühlluftdurchlasses (30) einen Stirneinlauf bildet.

9. Turbine nach einem der Ansprüche 1 bis 8, **dadurch gekennzeichnet, dass** im Innenraum (31) der Turbinenleitschaufel (17) ein Einsatz (32) zur Prallkühlung angeordnet ist.

10. Turbine nach einem der Ansprüche 1 bis 9, **dadurch gekennzeichnet, dass** die Schaufelfüße (13) der Laufschaufeln (9) wenigstens einen zusätzlichen Zuführkanal (34, 35) zur Führung eines Kühlluftstroms aufweisen.

## Claims

1. Turbine (1), in particular high-pressure turbine, for an aircraft engine (2), with a housing (18) on which turbine guide blades (17) are arranged circumferentially, wherein the turbine guide blades (17) have at least one interior space (31) which is flowed through by cooling air during the operation of the turbine (1), and wherein at least one turbine guide blade (17) has, in the region of an inner wall (29) in a radial direction (R) of the turbine (1), a cooling air passage (30) via which cooling air can be supplied to the interior space (31) of the turbine guide blade (17), **characterized in that** a rotor apparatus (3) with blade platforms (27) is arranged upstream of the turbine guide blades (17), wherein blade roots (13) of rotor blades (9) of said rotor apparatus (3) have a passage (23) for conducting a cooling-air stream with swirl into an annular space (26), which is charged with swirling flow, upstream of the cooling air passage (30), wherein the cooling-air stream can be fed from the annular space (26) to a sealing-air annular space (28) which is arranged, in a radial direction of the turbine (1), below the inner wall (29) of the at least one turbine guide blade (17), and wherein the swirl of the cooling-air stream can be set such that, in addition to the cooling of the at least one turbine guide blade (17), a gap (37) between the blade platforms (27) of the rotor apparatus (3) and the inner wall (29) of the turbine guide blades (17) is also sealed off.

2. Turbine according to Claim 1, **characterized in that** the cooling air passage (30) has a geometry which forms a diffuser channel.

3. Turbine according to either of Claims 1 and 2, **characterized in that** the cooling-air passage (30) has a cross-sectional area which widens in the manner of a diffuser in a flow direction (5).

4. Turbine according to any of Claims 1 to 3, **characterized in that** a centreline (38) of the cooling-air passage (30) is curved proceeding from an air inlet (40) in the direction of an air outlet (41), wherein, in the region of the air outlet (41), the centreline (38) runs substantially in the radial direction (R) of the turbine (1).

5. Turbine according to any of Claims 1 to 4, **characterized in that**, in the region of an air inlet (40), the cooling-air passage (30) is delimited in a circumferential direction (U) of the turbine (1) by two side surfaces, the spacing of which increases in the circumferential direction (U) of the turbine (1) proceeding from the air inlet (40) in the direction of an air outlet (41).

6. Turbine according to any of Claims 1 to 5, **characterized in that** an air inlet (40) of the cooling-air passage (30) is designed as an inlet of NACA configuration.

7. Turbine according to any of Claims 1 to 6, **characterized in that** an air inlet (40) of the cooling-air passage (30) is formed with an entry lip.

8. Turbine according to any of Claims 1 to 7, **characterized in that** an air inlet (40) of the cooling-air passage (30) forms a frontal entry.

9. Turbine according to any of Claims 1 to 8, **characterized in that** an insert (32) for impingement cooling is arranged in the interior space (31) of the turbine guide blade (17).

10. Turbine according to any of Claims 1 to 9, **characterized in that** the blade roots (13) of the rotor blades (9) have at least one additional feed channel (34, 35) for conducting a cooling-air stream.

## Revendications

1. Turbine (1), en particulier turbine haute pression, pour un moteur d'aéronef (2), comprenant un boîtier (18) sur la périphérie duquel sont disposées des aubes directrices de turbine (17), les aubes directrices de turbine (17) présentant au moins un espace intérieur (31) parcouru par de l'air de refroidissement pendant le fonctionnement de la turbine (1), et au moins une aube directrice de turbine (17) présentant, dans la région d'une paroi intérieure (29) dans la direction radiale (R) de la turbine (1), un passage d'air de refroidissement (30) par le biais duquel l'espace intérieur (31) de l'aube directrice de turbine (17) peut être alimenté en air de refroidissement, **caractérisée en ce qu'**en amont des aubes directrices de turbine (17) est disposé un dispositif de rotor (3) avec des plates-formes d'aubes (27), des embases d'aubes (13) d'aubes mobiles (9) de ce dispositif de rotor (3) présentant un passage (23) pour guider un flux d'air de refroidissement avec tourbillonnement dans un espace annulaire (26) sollicité avec un écoulement tourbillonnaire avant le passage d'air de refroidissement (30), le flux d'air de refroidissement pouvant être acheminé depuis l'espace annulaire (26) à un espace annulaire d'air de verrouillage (28) qui est disposé dans la direction radiale de la turbine (1) sous la paroi intérieure (29) de l'au moins une aube directrice de turbine (17), et le tourbillon du flux d'air de refroidissement pouvant être ajusté de telle sorte qu'en plus du refroidissement de l'au moins une aube directrice de turbine (17), un interstice (37) entre les plates-formes d'aube (27) du dispositif de rotor (3) et la paroi intérieure (29) des aubes directrices de turbine (17) soit également étanchéifié.

2. Turbine selon la revendication 1, **caractérisée en ce que** le passage d'air de refroidissement (30) présente une géométrie formant un canal de diffuseur.

3. Turbine selon l'une quelconque des revendications 1 et 2, **caractérisée en ce que** le passage d'air de refroidissement (30) présente une surface en section transversale s'élargissant sous forme de diffuseur dans la direction d'écoulement (5).

4. Turbine selon l'une quelconque des revendications 1 à 3, **caractérisée en ce qu'**une ligne médiane (38) du passage d'air de refroidissement (30) est courbée à partir d'une entrée d'air (40) dans la direction d'une sortie d'air (41), la ligne médiane (38) s'étendant dans la région de la sortie d'air (41) essentiellement dans la direction radiale (R) de la turbine (1).

5. Turbine selon l'une quelconque des revendications 1 à 4, **caractérisée en ce que** le passage d'air de refroidissement (30) est limité dans la région d'une entrée d'air (40) dans la direction périphérique (U) de la turbine (1) par deux surfaces latérales dont l'espacement augmente dans la direction périphérique (U) de la turbine (1) à partir de l'entrée d'air (40) dans la direction d'une sortie d'air (41).

6. Turbine selon l'une quelconque des revendications 1 à 5, **caractérisée en ce qu'**une entrée d'air (40) du passage d'air de refroidissement (30) est réalisée sous forme de prise d'air NACA.

7. Turbine selon l'une quelconque des revendications 1 à 6, **caractérisée en ce qu'**une entrée d'air (40) du passage d'air de refroidissement (30) est réalisée avec une lèvre d'entrée.

8. Turbine selon l'une quelconque des revendications 1 à 7, **caractérisée en ce qu'**une entrée d'air (40) du passage d'air de refroidissement (30) forme une entrée frontale.

9. Turbine selon l'une quelconque des revendications 1 à 8, **caractérisée en ce qu'**un insert (32) pour le refroidissement tourbillonnaire est disposé dans l'espace intérieur (31) de l'aube directrice de turbine (17).

10. Turbine selon l'une quelconque des revendications 1 à 9, **caractérisée en ce que** les embases d'aubes (13) des aubes mobiles (9) présentent au moins un canal d'alimentation supplémentaire (34, 35) pour le guidage d'un flux d'air de refroidissement.
